# EUROPÄISCHE PATENTSCHRIFT

(11) **EP 2 324 167 B1**
(45) Veröffentlichungstag und Bekanntmachung des Hinweises auf die Patenterteilung: **23.10.2013**
(21) Anmeldenummer: 09736111.7
(22) Anmeldetag: 01.09.2009
(51) Int. Cl.: E04F 15/02

(54) **FUSSBODENBELAG**
FLOOR COVERING
REVETEMENT DE SOL

(30) Priorität: 12.09.2008 DE 102008047098
(43) Veröffentlichungstag der Anmeldung: 25.05.2011
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg
(86) Internationale Anmeldenummer: PCT/DE2009/001229
(87) Internationale Veröffentlichungsnummer: WO 2010/028623

(56) Entgegenhaltungen:
- WO-A2-2008/017301

## Beschreibung

Die Erfindung betrifft einen Fußbodenbelag gemäß den Merkmalen im Oberbegriff des Patentanspruchs 1.

Durch die WO 2008/017301 A2 zählen Fußbodenbeläge zum Stand der Technik, die aus einer Vielzahl von im Verbund verlegten Elementplatten bestehen, die an ihren Kopfseiten und in ihren Längsseiten Verriegelungsleisten besitzen, welche in der Montagelage bei in einem Belag benachbarten Elementplatten miteinander in Eingriff gelangen. Hierbei sind in den Kopfseiten Nuten vorgesehen, wobei die Nuten zweier aneinander stoßender Kopfseiten korrespondieren und einen Sperrkanal zur Aufnahme einer Kopffeder ausbilden. Die Kopffeder ist in der Nut vormontiert und steht über ein der Längsseite der Elementplatte zugewandtes Ende der Nut vor. Gleichzeitig ist die Kopffeder im vormontierten Zustand vollständig innerhalb der Nut gekammert und kann durch Verschieben des überstehenden Endes der Kopffeder in die Nut hinein, zumindest teilweise von der einen Nut in die korrespondierende Nut der benachbarten Elementplatte verlagert werden. Der wesentliche Vorteil eines solchen aus Elementplatten zusammengesetzten Fußbodenbelags ist, dass das nachträgliche Einschlagen oder Einschieben der Kopffedern in den Sperrkanal entfällt. Dieser Vorgang des Einschiebens wird daher werkseitig vorgenommen.

Während das werkseitige maschinelle Einsetzen der Kopffedern kein Problem darstellt, muss beim Verlegen gewährleistet werden, dass die Kopffedern einerseits leicht verschiebbar sind, andererseits aber keine Verlagerung der aneinander angrenzenden Kopfseiten in Hochrichtung erlauben, was zu einem unerwünschten Höhenversatz auf der Sichtseite führen würde, insbesondere, wenn die Elementplatten in der Nähe der Kopfseiten belastet werden. Die Kopffedern sollen daher einerseits möglichst fest sitzen, andererseits aber leicht verlagerbar sein.

Der Erfindung liegt die Aufgabe zugrunde, einen aus Elementplatten bestehenden Fußbodenbelag aufzuzeigen, bei welchem kopfseitige Verschiebefedem zum Einsatz kommen, die sich sowohl leicht verlagern lassen, aber auch unter Belastung des Fußbodenbelags einen Höhenversatz im Bereich der Kopfseiten minimieren, so dass der Fußbodenbelag anwendungstechnisch verbessert wird.

Diese Aufgabe wird durch die Merkmale des Patentanspruchs 1 gelöst.

Wesentlich bei dem erfindungsgemäßen Fußbodenbelag ist, dass die Kopffeder in einer ganz besonderen Art und Weise gewellt ist. Es ist vorgesehen, dass die Kopffeder wenigstens einen ungewellten Bereich aufweist, welcher von den Enden der Kopffeder beabstandet zwischen zwei gewellten Bereichen angeordnet ist.

Es ist zwar durch die WO 2008/017301 A2 bekannt, gewellte Kopffedern einzusetzen, allerdings ist bei der WO 2008/017301 A2 eine durchgehende Wellung beschrieben. Das hat zur Folge, dass sich die Kopffeder über ihre gesamte Länge relativ elastisch verhält, also leicht zu verschieben ist, allerdings auch unter Belastung federt, was zu unerwünschtem Höhenversatz führen kann, wenn benachbarte Paneele ungleich belastet werden. Um dieses Problem zu lösen, ist nunmehr wenigstens ein ungewellter und daher weniger elastischer Bereich vorgesehen und zudem ein elastischer, gewellter Bereich vorgesehen. Wichtig dabei ist, dass wenigstens ein ungewellter Bereich im Abstand von den Enden der Kopffeder, also bevorzugt im mittleren Bereich angeordnet ist, um den mittleren Bereich der Kopfseite zu unterstützen.

Bevorzugt ist der ungewellte Bereich massiv ausgeführt, so dass dieser exakt in die Nut passt. Beim Verlagern ist die Reibung in diesen ungewellten Bereichen daher am größten. Es ist daher zweckmäßig, die Größe der ungewellten Bereiche zu begrenzen, damit die Kopffeder leichtgängig verschiebbar bleibt. Es hat sich gezeigt, dass ein Verhältnis von mindestens 2:1 zwischen gewellten und ungewellten Bereichen angestrebt werden soll. Bei diesem Verhältnis ist die Feder leicht verschiebbar, gewährleistet aber zugleich, dass die Kopfseiten auch unter Belastung exakt fluchten.

Es wird zudem als vorteilhaft angesehen, wenn an mindestens einem Ende der Kopffeder ein ungewellter Bereich ausgebildet ist.

Die Kopffeder sollte in den ungewellten Bereichen eine Dicke aufweisen, die auch bei einer Belastung der Elementplatten größer ist als die Dicke der gewellten Bereiche. Das lässt sich durch unterschiedliche Dicken in den gewellten und ungewellten Bereichen realisieren. Im unbelasteten Zustand kann die Dicke der gewellten und ungewellten Bereiche gleich groß sein, was durch entsprechende Amplituden bzw. entsprechend hohe Wellenberge möglich ist. Dabei sollten die Wellentäler den Wellenbergen unmittelbar gegenüberliegen, da sich nur dann ein elastisches Verhalten der gewellten Bereiche ergibt.

Weitere Vorteile können sich durch die Orientierung der Wellenberge und Wellentäler ergeben. Bei der Erfindung bildet die Ausnehmung in der Nut eine Rampe, auf der ein Nocken der Kopffeder aufläuft. In Abhängigkeit von der Steigung des Nockens und der Ausnehmung ergibt sich eine aus Querverlagerung und Längsverlagerung resultierende Bewegungsrichtung, die durch die Orientierung des Kontaktbereichs von Nocken und Ausnehmung bestimmt wird. In jedem Fall ergibt sich eine Bewegungsrichtung diagonal zur Kopfseite der Elementplatte. Die Gleitreibungskräfte zwischen der Kopffeder und den Nutwänden können minimiert werden, wenn die Wellenberge, bzw. der jeweilige Wellenkamm eines Wellenbergs, so orientiert ist wie die resultierende Bewegungsrichtung der Kopffeder. Die Wellenberge und -täler sind dadurch quasi schräg gestellt. Sie besitzen dann zwar eine etwas größere Länge, als wenn sie im rechten Winkel zur Längsachse der Kopffeder verlaufen, allerdings ist dies gegenüber den Vorteilen, die aus einem geringeren Gleitreibungswiderstand resultieren, vernachlässigbar.

Im Ergebnis wird durch die Schrägstellung der Wellenberge und -täler erreicht, dass die Kopffeder beim Verlagern mit weniger Oberflächenbereichen der Nuten in Kontakt kommt und daher wesentlich leichter verschiebbar ist. Diese Reduzierung der Gleitreibungskräfte kann dafür ausgenutzt werden, die Toleranzen zwischen Nut und Feder enger zu wählen, d.h. die Kopffeder etwas dicker zu gestalten. Dadurch sitzt sie in der Einbaulage strammer in den Nuten, was dazu führt, dass die Kopffeder auch bei Belastung nicht innerhalb der Nuten verkantet, so dass es an der Sichtseite der Elementplatten zu keinem störenden Versatz kommt. Das Verlegeergebnis wird verbessert, ohne die Verlegung zu erschweren.

Der Verschiebeweg in Längsrichtung der Kopfnut ist vorzugsweise kleiner als 10 mm und im Idealfall so groß wie die Breite der längsseitigen Feder einer Elementplatte, d.h. beispielsweise 1,5 bis 4 mm. Dabei soll der aus der Kopfnut vorstehende Betätigungsabschnitt der Kopffeder nicht über die äußerste Kante des Elementpaneels, d.h. insbesondere nicht über eine untere Verriegelungsleiste vorstehen. In der verriegelten Position befindet sich die Kopffeder vollständig innerhalb der Kopfnut.

Unter einer Kopfseite im Sinne der Erfindung ist eine Stirnseite einer Elementplatte zu verstehen. Die Kopfseite ist in der Regel die kürzere Seite der Elementplatte, wobei auch quadratische Elementplatten eine Kopfseite mit Kopffeder sowie Längsseiten besitzen.

Die Auflauffläche ist eine Konturierung in Form einer Ausnehmung in der Nut. Die Ausnehmung selbst ist im Nutgrund vorgesehen. Die Ausnehmung kann insbesondere durch einen Sägeschnitt hergestellt werden, so dass die Ausnehmung die Kontur eines Kreisabschnitts hat. Dieser Kreisabschnitt kann in seinen Übergangsbereichen zum Nutgrund auch gerundet sein, so dass sich gewissermaßen eine Sinusform der Ausnehmung ergibt. Dies ist nicht zuletzt fertigungstechnisch bedingt, da sich während der Bearbeitung die einzelnen Elementplatten parallel zu dem Sägeblatt, welches zum Einbringen der Ausnehmung verwendet wird, bewegen. Wenn diese Bewegung nicht absolut synchron erfolgt, kommt es zu Verwischungen im Kantenbereich und damit zu gerundeten Übergängen. Entscheidend ist die Funktion der Auflauffläche, nämlich, dass sie als konturiertes Widerlager dient, um eine seitliche Verlägerung der Kopffeder bei deren Längsverschiebung zu bewirken.

Theoretisch ist es auch denkbar, dass die Ausnehmung eine rechteckig konfigurierte Tasche ist, die durch einen Fingerfräser erzeugt wird oder auch nur eine Bohrung im Nutgrund ist, wobei die Auflauffläche einer Bohrung auf den Bohrungsrand beschränkt wird, so dass der in diesem Fall in die Bohrung ragende Nocken nur punktuell mit der Auflauffläche in Kontakt kommt.

Der Erfindungsgedanke ist auf alle Bodensysteme anwendbar, bei denen ein Oberbelag auf einem Träger angeordnet ist, wie beispielsweise Echtholzbeläge, Laminat, Träger mit lackierten Oberflächen als Oberbelag, Linoleum , Kork auf Trägerplatten etc. Die Deckschicht kann insbesondere aus einem Dekorpapier mit Overlay bestehen, welches die Optik der Elementplatte bestimmt. Bei dem Fußbodenbelag kann es sich somit um einen Parkettboden, einen Fertigparkettboden, einen Echtholzboden oder einen Laminatfußboden handeln.

Vorteilhafte Weiterbildungen des Erfindungsgedankens sind Gegenstand der Unteransprüche, deren Inhalt nachfolgend anhand der in den schematischen Zeichnungen dargestellten Ausführungsbeispiele näher erläutert wird. Es zeigen:
- Figur 1: in der Draufsicht einen Ausschnitt aus einem Fußbodenbelag;
- Figur 2: in der Seitenansicht einen Vertikalschnitt durch den kopfseitigen Stoßbereich zwischen zwei Elementplatten gemäß der Linie II-II in der Figur 1;
- Figur 3: eine perspektivische Ansicht des Eckbereichs einer Elementplatte in Blickrichtung auf die Kopfseite;
- Figur 4: eine Draufsicht auf eine Kopfseite einer Elementplatte, die teilweise geschnitten dargestellt ist, mit einer Feder und
- Figur 5: die Kopfseite der Elementplatte in Blickrichtung des Pfeils V der Figur 4 (Stimansicht der Kopfseite)

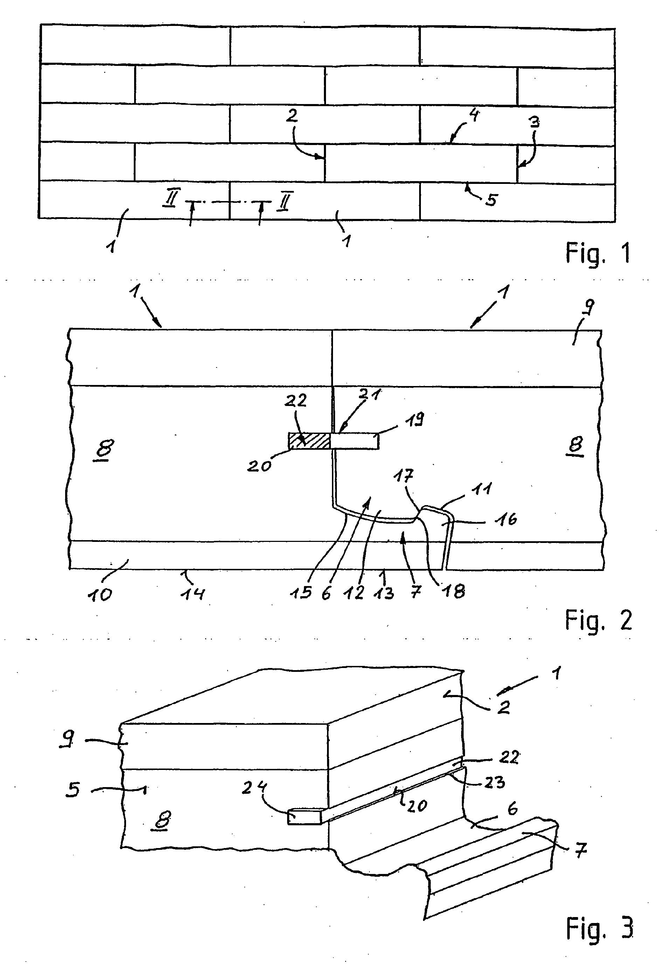

Figur 1 zeigt einen Fußbodenbelag, bestehend aus einer Vielzahl von im Verbund verlegten rechteckigen Elementplatten 1. Die Elementplatten 1 weisen jeweils an ihren Kopfseiten 2, 3 und an ihren Längsseiten 4, 5 Verriegelungsleisten auf. Die Verriegelungsleisten gelangen in der Montagelage bei in einem Belag benachbarten Paneelen miteinander in Eingriff.

Verriegelungsleisten 6, 7 an den Kopfseiten 2 bzw. 3 einer Elementplatte 1 erkennt man in der Figur 2. In der Figur 2 ist dargestellt ein Vertikalschnitt durch den kopfseitigen Stoßbereich zwischen zwei Elementplatten 1, so dass man auf die Verbindung an den Kopfseiten 2, 3 schaut. Die nicht dargestellten Verriegelungsleisten an den Längsseiten einer Elementplatte 1 können anders konfiguriert sein als die Verriegelungsleisten 6, 7.

Eine Elementplatte 1 besteht aus einer Tragschicht 8 aus Fasermaterial, üblicherweise aus einer hoch- oder mittelverdichteten Faserplatte, wobei die Tragschicht 8 eine oberseitige Deckschicht 9 und einen unterseitigen Gegenzug 10 aufweist. Die Deckschicht 9 kann aus einem Dekorpapier mit einem Overlay bestehen, welches die Optik der Elementplatte 1 bestimmt. Das sogenannte Overlay bzw. die Versiegelung bildet eine spezialbeharzte Nutzschicht, die der Elementplatte 1 eine hohe Oberflächenstrapazierfähigkeit verleiht. Der Gegenzug 10 auf der Unterseite der Tragschicht 8 dient der Formstabilität und der Feuchtigkeitsabsperrung.

Jede Elementplatte 1 weist eine Verriegelungsleiste 6 (1. Verriegelungsleiste) an der einen Kopfseite 2 (1. Kopfseite) und eine Verriegelungsleiste 7 (2. Verriegelungsleiste) an der gegenüber liegenden Kopfseite 3 (2. Kopfseite) auf. Die 1. Verriegelungsleiste 6 besitzt einen nach unten offenen 1. Kuppelkanal 11 sowie einen nach unten gerichteten endseitigen 1. Kuppelwulst 12. Die 2. Verriegelungsleiste 7 an der gegenüber liegenden 2. Kopfseite 3 einer Elementplatte 1 ist bodenseitig angeordnet und springt gegenüber der Tragschicht 8 vor. Die Unterseite 13 der 2. Verriegelungsleiste 7 verläuft in der Ebene der Unterseite 14 der Elementplatte 1. Die 2. Verriegelungsleiste 7 weist einen nach oben offenen 2. Kuppelkanal 15 sowie einen nach oben gerichteten endseitigen 2. Kuppelwulst 16 auf.

Bei in Eingriff stehender 1. Verriegelungsleiste 6 und 2. Verriegelungsleiste 7 greift der 1. Kuppelwulst 12 in den 2. Kuppelkanal 15 und der 2. Kuppelwulst 16 in den 1. Kuppelkanal 11. Hierbei kontaktieren sich die einander zugewandten und in die gleiche Richtung geneigt verlaufenden Flanken 17, 18 des 1. Kuppelwulstes 12 und des 2. Kuppelwulstes 16. Es entsteht auf diese Weise ein Druckpunkt an den Flanken 17, 18, der eine Kraft bewirkt, die ein Gegeneinanderziehen der beiden Elementplatten 1 im Bereich der Deckschicht 9 erzeugt, so dass der Übergang im Stoßbereich der beiden Elementplatten 1 an der Deckschicht 9 quasi fugenlos ist.

In den Kopfseiten 2, 3 der Elementplatten 1 sind Nuten 19, 20 ausgebildet, die sich über die gesamte Länge der Kopfseiten 2, 3 erstrecken. Wie anhand der Figur 2 zu erkennen ist, korrespondieren die Nuten 19, 20 der aneinander stoßenden Kopfseite 2, 3 und bilden einen Sperrkanal 21 aus. In diesen Sperrkanal 21 ist eine schraffiert dargestellte Kopffeder 22 eingeschoben. Die Nuten 19, 20 in den Kopfseiten 2, 3 sind oberhalb der Verriegelungsleisten 6, 7 in der Tragschicht 8 vorgesehen.

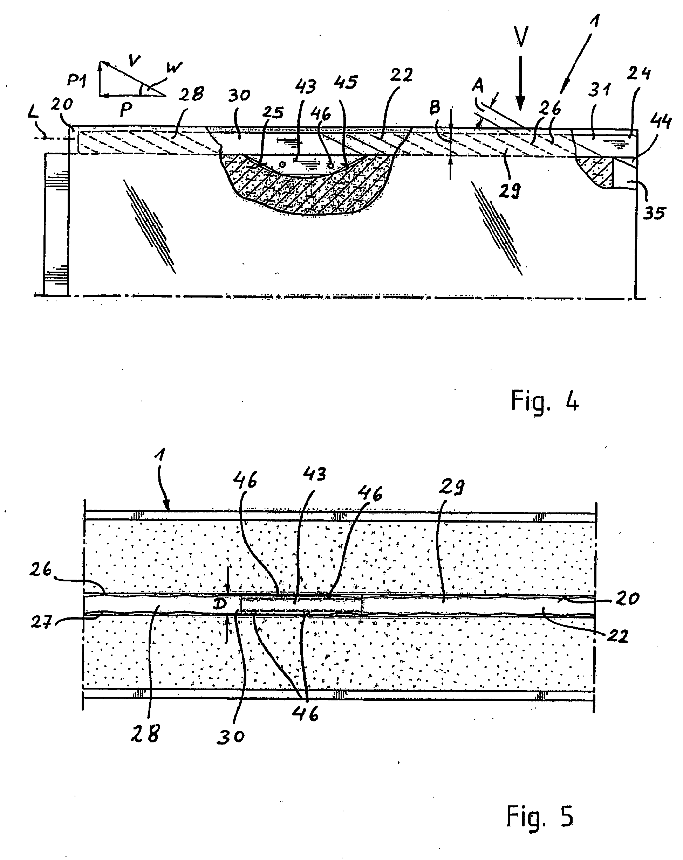

Figur 3 zeigt eine perspektivische Darstellung in Blickrichtung auf die Kopfseite 2 einer Elementplatte 1. Aus dieser Darstellung geht hervor, dass die Kopffeder 22 in der vormontierten Position vollständig innerhalb der Nut 20 angeordnet ist und insbesondere nicht über die kopfseitige Nutmündung 23 vorsteht. Allerdings ragt die Kopffeder 22 mit ihrem Ende 24 im Bereich der Längsseite 5 aus der Nut 20 hervor. In Figur 3 ist lediglich beispielhaft dargestellt, wie die Kopffeder 22 in der Nut 20 angeordnet ist. Die Funktionsweise sowie mögliche Ausführungsformen der Kopffeder wird nachfolgend anhand der Figuren 4 und 5 erläutert.

In Figur 4 wird eine Variante einer Kopffeder 22 dargestellt, die sich wiederum in einer Nut 20 der Elementplatte 1 befindet und wiederum beim Verriegeln zweier Elementplatten in Richtung des Pfeils P verlagert wird und dabei aus der Nut 20 in Richtung des Pfeils P1 austritt. Aus den Pfeilen P und P1 resultiert die Bewegungsrichtung V. Der Winkel W liegt bevorzugt zwischen 25° und 30° bezogen auf die Längsachse L der Kopffeder 22, die sich mit der Richtung des Pfeils P deckt.

Die resultierende Bewegungsrichtung V bestimmt die Orientierung von Wellenbergen 26 und Wellentälern 27 in den gewellten Bereichen 28 und 29 der Kopffeder 22. Zwischen den gewellten Bereichen 28 und 29 befindet sich etwa mittig der Kopffeder 22 ein ungewellter Bereich 30. Ein weiterer ungewellter Bereich 31 befindet sich am Ende 24 der Kopffeder 22.

Die Wellenberge 26 und Wellentäler 27 verlaufen parallel zur Bewegungsrichtung V.

In Figur 4 bezeichnet A den kürzesten Abstand zwischen zwei benachbarten Wellenbergen 26 und B die Breite der Kopffeder 22. Es ist zu erkennen, dass A kleiner B ist.

Die Bewegungsrichtung V der Kopffeder 22 ist auf zwei Nocken 43, 44 zurückzuführen, welche sich in Richtung des Nutgrunds der Nut 20 erstrecken. Ein erster Nocken 43 befindet sich im Übergangsbereich vom mittleren zum in der Bildebene linken Drittel der Kopffeder 22. Der Nocken 43 ist trapezförmig konfiguriert und ragt in eine Ausnehmung 45, welche kreisabschnittförmig konfiguriert ist. Die Trapezform bzw. die Anpassung des Nockens 43 an die Länge der Ausnehmung, stellt sicher, dass die Kopffeder nicht ungewollt in die eine oder andere Richtung verrutscht und dient zur Lageorientierung innerhalb der Nut 20. Die kurze Seite des Trapezes, die zuerst in die Nut 20 eingeführt wird, ist vorzugsweise zur Ober- und Unterseite angefast, um eine Einführschräge zu bilden, die das Einsetzen der Kopffeder 22 in die Nut 20 erleichtert.

Die Ausnehmung 45 ist beispielsweise durch ein scheibenförmiges Sägeblatt erzeugt worden, welches in die Nut 20 eingeführt worden ist. Der Nocken 43 ist auf die Tiefe der Ausnehmung 45 abgestimmt, so dass die Kopffeder 22 im unverriegelten Zustand am Nutgrund anliegt. Dabei steht ihr vorderes Ende 24 nicht über die Elementplatte 1 vor. An diesem vorderen Ende befindet sich der zweite Nocken 44, welcher sich in den längsseitigen Kuppelkanal 35 erstreckt. Dieser Nocken 44 läuft auf der 90 Grad-Ecke im Übergangsbereich zwischen dem längsseitigen Kuppelkanal 35 und der stirnseitigen Nut 20 auf. Da der Verschiebeweg gering ist, ist dieser zweite Nocken 44 kürzer gestaltet bzw. steht nicht so weit in Richtung des Kuppelkanals 35 vor wie der Nocken 43 in der dafür vorgesehenen Ausnehmung 45. Die Geometrien der Nocken 43, 44 können so aufeinander abgestimmt sein, dass eine parallele Verschiebung der Kopffeder 22 möglich ist.

Das überstehende Ende 24 der Kopffeder 22 kann auch in Richtung von bereits verlegten Elementplatten 1 weisen, also in die entgegengesetzte Richtung. In diesem Fall gelangt das Ende 24 in Eingriff mit bereits verlegten Elementplatten 1, so dass die neue Reihe von Elementplatten 1 durch die bereits verlegten Elementplatten 1 verriegelt wird. Das ist ein Vorteil bei der Verlegung der letzten oder randseitigen Reihe, bei welcher es zweckmäßig ist, die Schubrichtung umzukehren, d.h. die Enden 24 der Kopffeder 22 von dem anderen Ende her teilweise von der einen Nut 20 in die korrespondierende Nut 19 der benachbarten Elementplatte 1 zu schieben (Gegenschubrichtung) bzw. zu verlagern.

Anhand der Figuren 4 und 5 ist ferner zu erkennen, dass mehrere Klemmzapfen 46 im Bereich des Nockens 43 verteilt angeordnet sind. Die Klemmzapfen 46 sind kleine Vorsprünge auf der Oberseite bzw. Unterseite des Nockens 43 und dienen dazu, die Kopffeder 22 in der dargestellten Position klemmend zu halten.

Figur 5 zeigt die Kopffeder 22 in der Stirnansicht. Aus dieser Perspektive wird deutlich, dass die Kopffeder 22 bereichsweise zur Ober- und Unterseite der Nut 20 hin gewellt ausgeführt ist, so dass die Kontaktflächen der Kopffeder 22 mit der Nut 20 reduziert werden, um die Reibung zu verringern. Zudem ist zu erkennen, dass die Klemmzapfen 46 zueinander versetzt sowohl an der Oberseite als auch an der Unterseite der Kopffeder 22 angeordnet sind und diese innerhalb der Nut 20 halten. Des Weiteren wird deutlich, dass der mit gestrichelter Linie eingezeichnete Nocken 43 eine Dicke besitzt, die kleiner ist als die Dicke D des Grundkörpers der Kopffeder 22, damit die Reibung zwischen dem Nocken 43 und der Auflauffläche innerhalb der Ausnehmung 45 möglichst gering ist. Es ist auch zu erkennen, dass die Wandstärke in den gewellten Bereichen nicht gleich der Dicke der Kopffeder 22 ist. In den gewellten Bereichen ist die Dicke D geringer als in den ungewellten Bereichen.

### Bezugszeichen:

- 1: - Elementplatte
- 2: - Kopfseite
- 3: - Kopfseite
- 4: - Längsseite
- 5: - Längsseite
- 6: - Verriegelungsleiste
- 7: - Verriegelungsleiste
- 8: - Tragschicht
- 9: - Deckschicht
- 10: - Gegenzug
- 11: - 1. Kuppelkanal
- 12.: - 1. Kuppelwulst
- 13: - Unterseite v. 7
- 14: - Unterseite v. 1
- 15: - 2. Kuppelkanal
- 16: - 2. Kuppelwulst
- 17: - Flanke
- 18: - Flanke
- 19: - Nut
- 20: - Nut
- 21: - Sperrkanal
- 22: - Kopffeder
- 23: - Nutmündung
- 24: - Ende
- 25: - Auflauffläche
- 26: - Wellenberg
- 27: - Wellental
- 28: - gewellter Bereich
- 29: - gewellter Bereich
- 30: - ungewellter Bereich
- 31: - ungewellter Bereich
- 35: - Kuppelkanal
- 43: - Nocken
- 44: - Nocken
- 45: - Ausnehmung
- 46: - Klemmzapfen

- A: - Abstand
- B: - Breite
- D: - Dicke
- L: - Länge
- P: - Pfeil
- P1: - Pfeil
- V: - Bewegungsrichtung
- W: - Winkel

## Patentansprüche

1. Fußbodenbelag bestehend aus einer Vielzahl von im Verbund verlegbaren Elementplatten (1), die an ihren Kopfseiten (2, 3) und an ihren Längsseiten (4, 5) Verriegelungsleisten (6, 7) besitzen, welche in der Montagelage bei in einem Belag benachbarten Elementplatten (1) miteinander in Eingriff gelangen, wobei in den Kopfseiten (2, 3) Nuten (19, 20) vorgesehen sind und wobei die Nuten (19, 20) zweier aneinander stoßender Kopfseiten (2, 3) fluchten und einen Sperrkanal (21) zur Aufnahme einer Kopffeder (22) ausbilden, wobei die Kopffeder (22) in einer der Nuten (20) vormontiert ist, die Kopffeder (22) über ein der Längsseite (5) der Elementplatte (1) zugewandtes Ende der Nut (20) vorsteht und durch Verschieben des überstehenden Endes (24) der Kopffeder (22) in die Nut (20) hinein teilweise von der einen Nut (20) in die korrespondierende Nut (19) der benachbarten Elementplatte (1) verlagerbar ist, wobei die die Kopffeder (22) aufnehmende Nut (20) wenigstens eine Ausnehmung (45) aufweist, in welcher eine Auflauffläche (25) ausgebildet ist und in welche ein Nocken (43) der Kopffeder (22) eingreift und wobei die Kopffeder (22) gewellt ist, wobei ihre gewellten Seiten einer Dekorseite und einer Unterseite der Elementplatten (1) zugewandt sind, **dadurch gekennzeichnet, dass** die Kopffeder (22) wenigstens einen ungewellten Bereich (30) aufweist und der wenigstens eine ungewellte Bereich (30) von den Enden (24) der Kopffeder (22) beabstandet zwischen zwei gewellten Bereichen (28, 29) angeordnet ist.

2. Fußbodenbelag nach Anspruch 1, **dadurch gekennzeichnet, dass** ein weiterer ungewellter Bereich (31) an einem Ende (24) der Kopffeder (22) angeordnet ist.

3. Fußbodenbelag nach Anspruch 1 oder 2, **dadurch gekennzeichnet, dass** die Kopffeder (22) in den ungewellten Bereichen (30, 31) eine größere Dicke (D) aufweist als in den gewellten Bereichen (28, 29).

4. Fußbodenbelag nach einem der Ansprüche 1 bis 3, **dadurch gekennzeichnet, dass** die Summe der gewellten Bereiche (28, 29) größer ist, insbesondere zumindest doppelt so groß ist, wie die Summe der ungewellten Bereiche (30, 31).

5. Fußbodenbelag nach einem der Ansprüche 1 bis 4, **dadurch gekennzeichnet, dass** die Orientierung von Wellentälern (27) und Wellenbergen (26) der gewellten Bereiche (28, 29) der Bewegungsrichtung (V) der Kopffeder (22) entspricht, wenn die Kopffeder (22) unter Anlage des Nockens (43) in der Ausnehmung (45) verlagert wird.

6. Fußbodenbelag nach Anspruch 5, **dadurch gekennzeichnet, dass** die Wellenberge (26) und Wellentäler (27) in einem Winkel (W) von 20° bis 45°, insbesondere in einem Winkel von 25° bis 30°, zur Längsachse (L) der Kopffeder (22) verlaufen.

7. Fußbodenbelag nach Anspruch 5 oder 6, **dadurch gekennzeichnet, dass** der kürzeste Abstand (A) zwischen zwei benachbarten Wellenbergen (26) kleiner ist als die Breite (B) der Kopffeder (22).

8. Fußbodenbelag nach Anspruch 7, **dadurch gekennzeichnet, dass** das Verhältnis des Abstands (A) zur Breite (B) kleiner als 1:2 ist.

9. Fußbodenbelag nach einem der Ansprüche 1 bis 8, **dadurch gekennzeichnet, dass** der Nocken (43) eine geringere Dicke als die ungewellten Bereiche (20, 31) aufweist, wobei an einer Ober- und Unterseite des Nockens (43) Klemmzapfen (46) vorstehen, über welche die Kopffeder (22) punktuell klemmend in der Nut (20) gehalten ist.

10. Fußbodenbelag nach einem der Ansprüche 1 bis 9, **dadurch gekennzeichnet, dass** der Nocken (43) und die Ausnehmung (45) so konfiguriert sind, dass die Kopffeder (22) durch Verschieben eines überstehenden Endes (24) in Schubrichtung (P) oder Gegenschubrichtung teilweise von der einen Nut (20) in die korrespondierende Nut (19) der benachbarten Elementplatte (1) verlagerbar ist.

11. Fußbodenbelag nach Anspruch 10, **dadurch gekennzeichnet, dass** der Nocken (43) im Wesentlichen trapezförmig konfiguriert ist.

## Claims

1. Floor covering consisting of a plurality of interconnectable element boards (1) which comprise locking ledges (6, 7) at the head ends (2, 3) and the longitudinal sides (4, 5) thereof, which ledges engage with each other in the assembly position when the element boards (1) are adjacent to each other in a covering, grooves (19, 20) being provided in the head ends (2, 3) and the grooves (19, 20) of two abutting head ends (2, 3) being aligned and forming a blocking channel (21) for receiving a head tongue (22), the head tongue (22) being preassembled in one of the grooves (20), the head tongue (22) projecting beyond an end of the groove (20) facing the longitudinal side (5) of the element board (1) and being displaceable in part from the one groove (20) into the corresponding groove (19) of the adjacent element board (1) by moving the protruding end (24) of the head tongue (22) into the groove (20), the groove (20) receiving the head tongue (22) comprising at least one recess (45), in which a contact surface (25) is formed and in which a cam (43) of the head tongue (22) engages, and the head tongue (22) being waved, the waved sides thereof facing a decorated side and a bottom side of the element boards (1), **characterised in that** the head tongue (22) comprises at least one non-waved region (30) and the at least one non-waved region (30) is arranged between two waved regions (28, 29) and at a distance from the ends (24) of the head tongue (22).

2. Floor covering according to claim 1, **characterised in that** an additional non-waved region (31) is arranged at one end (24) of the head tongue (22).

3. Floor covering according to claim 1 or claim 2, **characterised in that** the head tongue (22) has a greater thickness (D) in the non-waved regions (30, 31) than in the waved regions (28, 29).

4. Floor covering according to any one of claims 1 to 3, **characterised in that** the sum of the waved regions (28, 29) is greater, in particular at least twice as great, as the sum of the non-waved regions (30, 31).

5. Floor covering according to any one of claims 1 to 4, **characterised in that** the orientation of wave troughs (27) and wave crests (26) of the waved regions (28, 29) corresponds to the movement direction (V) of the head tongue (22) when the head tongue (22) is displaced in the recess (45) through contact with the cam (43).

6. Floor covering according to claim 5, **characterised in that** the wave crests (26) and the wave troughs (27) extend at an angle (W) of from 20° to 45°, in particular at an angle of from 25° to 30°, to the longitudinal axis (L) of the head tongue (22).

7. Floor covering according to claim 5 or claim 6, **characterised in that** the shortest distance (A) between two adjacent wave crests (26) is smaller than the width (B) of the head tongue (22).

8. Floor covering according to claim 7, **characterised in that** the ratio of the distance (A) to the width (B) is less than 1:2.

9. Floor covering according to any one of claims 1 to 8, **characterised in that** the cam (43) has a smaller thickness than the non-waved regions (20, 31), clamping pins (46) protruding from a top side and a bottom side of the cam (43), by means of which clamping pins (46) the head tongue (22) is held in the groove (20) by selective clamping.

10. Floor covering according to any one of claims 1 to 9, **characterised in that** the cam (43) and the recess (45) are configured such that the head tongue (22) can be displaced in part from the one groove (20) into the corresponding groove (19) of the adjacent element board (1) by moving a protruding end (24) in the thrust direction (P) or counter-thrust direction.

11. Floor covering according to claim 10, **characterised in that** the cam (43) has a substantially trapezoidal configuration.

## Revendications

1. Revêtement de sol constitué d'une pluralité de plaques élémentaires (1) qui peuvent être assemblées en place et qui possèdent, sur leurs côtés de tête (2, 3) et sur leurs côtés longitudinaux (4, 5), des listels de verrouillage (6, 7), qui, en position de montage, s'engagent l'un avec l'autre dans des plaques élémentaires adjacentes (1) d'un revêtement de sol, dans lequel des rainures (19, 20) sont prévues dans les côtés de tête (2, 3) et dans lequel les rainures (19, 20) de deux côtés de tête (2, 3) s'appuyant l'un sur l'autre sont alignées et forment un sillon de blocage (21) pour recevoir une languette de tête (22), dans lequel la languette de tête (22) est prémontée dans l'une des rainures (20), la languette de tête (22) fait saillie d'une extrémité de la rainure (20) tournée vers le côté longitudinal (5) de la plaque élémentaire (1) et, par déplacement de l'extrémité saillante (24) de la languette de tête (22) dans la rainure (20), peut être déplacée en partie de l'une rainure (20) dans la rainure correspondante (19) de la plaque élémentaire adjacente (1), dans lequel la rainure (20) recevant le languette de tête (22) présente au moins un évidement (45), dans lequel est formée une surface d'arrêt (25) et dans lequel s'engage un ergot (43) de la languette de tête (22) et dans lequel la languette de tête (22) est ondulée, ses côtés ondulés étant tournés vers un côté décoratif et une partie inférieure des plaques élémentaires (1), **caractérisé en ce que** la languette de tête (22) présente au moins une zone non ondulée (30) et l'au moins une zone non ondulée (30) est aménagée à distance des extrémités de la languette de tête (22) entre deux zones ondulées (28, 29).

2. Revêtement de sol selon la revendication 1, **caractérisé en ce qu'**une autre zone non ondulée (31) est aménagée à une extrémité (24) de la languette de tête (22).

3. Revêtement de sol selon la revendication 1 ou la revendication 2, **caractérisé en ce que** la languette de tête (22) présente dans les zones non ondulées (30, 31) une plus grande épaisseur (D) que dans les zones ondulées (28, 29).

4. Revêtement de sol selon l'une quelconque des revendications 1 à 3, **caractérisé en ce que** la somme des zones ondulées (28, 29) est plus grande, en particulier au moins deux fois plus grande, que la somme des zones non ondulées (30, 31).

5. Revêtement de sol selon l'une quelconque des revendications 1 à 4, **caractérisé en ce que** l'orientation des creux d'ondulations (27) et des sommets d'ondulations (26) des zones ondulées (28, 29) correspond à la direction de déplacement (V) de la languette de tête (22) lorsque la languette de tête (22) est déplacée dans l'évidement (45) sous l'action de l'ergot (43).

6. Revêtement de sol selon la revendication 5, **caractérisé en ce que** les sommets (26) et les creux d'ondulations (27) s'étendent selon un angle (W) de 20 à 45°, en particulier selon un angle de 25 à 30°, par rapport à l'axe longitudinal (L) de la languette de tête (22).

7. Revêtement de sol selon la revendication 5 ou la revendication 6, **caractérisé en ce que** la distance la plus courte (A) entre deux sommets d'ondulations adjacents (26) est plus petite que la largeur (B) de la languette de tête (22).

8. Revêtement de sol selon la revendication 7, **caractérisé en ce que** le rapport de la distance (A) à la largeur (B) est inférieur à 1:2.

9. Revêtement de sol selon l'une quelconque des revendications 1 à 8, **caractérisé en ce que** l'ergot (43) présente une épaisseur plus faible que les zones non ondulées (20, 31), dans lequel des tenons de serrage (46) font saillie sur une face supérieure et une face inférieure de l'ergot (43), tenons par lesquels la languette de tête (22) est ponctuellement maintenue par serrage dans la rainure (20).

10. Revêtement de sol selon l'une quelconque des revendications 1 à 9, **caractérisé en ce que** l'ergot (43) et l'évidement (45) sont configurés de sorte que la languette de tête (22) puisse être déplacée, par déplacement d'une extrémité saillante (24) dans le sens de poussée (P) ou dans le sens inverse de poussée, en partie de la première rainure (20) dans la rainure correspondante (19) de la plaque élémentaire adjacente (1).

11. Revêtement de sol selon la revendication 10, **caractérisé en ce que** l'ergot (43) est configuré sensiblement en forme de trapèze.
